# EUROPÄISCHE PATENTANMELDUNG

(11) **EP 4 140 798 A1**
(43) Veröffentlichungstag der Anmeldung: **01.03.2023**
(21) Anmeldenummer: 22181516.0
(22) Anmeldetag: 28.06.2022
(51) Int. Cl.: B60L 5/24, B60L 5/38, B60L 5/08

(54) **ELEKTRISCHE KONTAKTIERUNGSVORRICHTUNG FÜR EINEN STROMABNEHMER EINES FAHRZEUGS, STROMABNEHMER UND FAHRZEUG**

(30) Priorität: 31.08.2021 AT 506962021
(71) Anmelder: Siemens Mobility Austria GmbH, 1210 Wien (AT)
(72) Erfinder: Saliger, Christian, 1130 Wien (AT); Flois, Christopher, 1020 Wien (AT); Smejkal, Clemens, 2214 Auersthal (AT)
(74) Vertreter: Deffner, Rolf

(57) **Zusammenfassung**

Die Erfindung bezieht sich auf eine elektrische Kontaktierungsvorrichtung für einen Stromabnehmer eines Fahrzeugs, mit zumindest einem elektrischen ersten Kontaktkörper (11), welcher über zumindest eine erste Federvorrichtung (18) mit zumindest einer ersten Lagervorrichtung (21) gekoppelt ist, wobei die zumindest erste Lagervorrichtung (21) mit einem Stromabnehmergestänge (1) oder einem Stromabnehmerhalter (46) verbindbar ist, wobei der zumindest erste Kontaktkörper (11) mit einem Fahrzeug elektrisch verbindbar ist.

Es wird vorgeschlagen, dass der zumindest erste Kontaktkörper (11) und die zumindest erste Lagervorrichtung (21) voneinander elektrisch isoliert sind.

Dadurch kann auf separate Isolatoren zur elektrischen Isolation eines Stromabnehmers gegenüber seiner Umgebung verzichtet werden.

## Beschreibung

### Die Erfindung betrifft eine elektrische

Kontaktierungsvorrichtung für einen Stromabnehmer eines Fahrzeugs, mit zumindest einem elektrischen ersten Kontaktkörper, welcher über zumindest eine erste Federvorrichtung mit zumindest einer ersten Lagervorrichtung gekoppelt ist, wobei die zumindest erste Lagervorrichtung mit einem Stromabnehmergestänge oder einem Stromabnehmerhalter verbindbar ist, wobei der zumindest erste Kontaktkörper mit einem Fahrzeug elektrisch verbindbar ist.

Elektrisch betriebene Fahrzeuge (z.B. Schienenfahrzeuge oder Nutzfahrzeuge wie elektrische Busse oder elektrische Lastkraftwagen) weisen häufig Stromabnehmer (z.B. Einholm- oder Scherenstromabnehmer, Seitenstromabnehmer, Ladestromabnehmer etc.) auf, mittels welchen eine Stromabnahme von einem Fahrdraht, von einer beispielsweise seitlich eines Fahrwegs angeordneten Stromschiene oder von einer Kontakthaube einer Ladestation etc. sowie eine Versorgung von Akkumulatoren und/oder elektrischen Antrieben der Fahrzeuge mit Elektrizität erfolgt.

Es kann erforderlich sein, Isolatoren mit den Stromabnehmern zu verbinden oder die Stromabnehmer auf Isolatoren anzuordnen, um die Stromabnehmer von ihrer Umgebung elektrisch zu isolieren. Dazu werden beispielsweise häufig Stützisolatoren eingesetzt.

Aus dem Stand der Technik ist beispielsweise die WO 2021/122375 A1 bekannt, welche eine Wippe für einen Stromabnehmer eines Fahrzeugs sowie einen Stromabnehmer zeigt. Die Wippe weist Schleifleisten auf, welche einen Fahrdraht kontaktieren und über Hebel, Torsionsfedern und Gehäuse, in welchen die Torsionsfedern gelagert sind, mit einem Stromabnehmergestänge verbunden sind. Die Gehäuse oder die Torsionsfedern können in einem faserverstärkten Kunststoff ausgeführt sein. Eine Isolation des Stromabnehmers erfolgt über Stützisolatoren, über welche der Stromabnehmer auf einem Fahrzeugdach gelagert ist.

Der genannte Ansatz weist in seiner bekannten Form den Nachteil auf, dass zur Isolation des Stromabnehmers Stützisolatoren vorgesehen sind, welche zu einer hohen Fahrzeugmasse oder zu einer negativen Beeinflussung aerodynamischer Fahrzeugeigenschaften führen können.

Der Erfindung liegt daher die Aufgabe zugrunde, eine gegenüber dem Stand der Technik weiterentwickelte elektrische Kontaktierungsvorrichtung anzugeben, welche leicht sowie mit einer möglichst geringen Zahl an unterschiedlichen Bauteilen ausgeführt ist und auch für Fahrzeuge mit hohen Anforderungen an aerodynamische Eigenschaften eingesetzt werden kann.

Erfindungsgemäß wird diese Aufgabe gelöst mit einer elektrischen Kontaktierungsvorrichtung nach Anspruch 1, bei welcher der zumindest erste Kontaktkörper und die zumindest erste Lagervorrichtung voneinander elektrisch isoliert sind, wobei die zumindest erste Federvorrichtung als elektrischer Isolator ausgebildet ist, oder/und wobei die zumindest erste Federvorrichtung über ein erstes Gehäuse mit der zumindest ersten Lagervorrichtung verbunden, die zumindest erste Federvorrichtung in dem ersten Gehäuse gelagert und das erste Gehäuse als elektrischer Isolator ausgebildet ist, oder/und wobei der zumindest erste Kontaktkörper über zumindest eine erste Führungsvorrichtung mit der zumindest ersten Lagervorrichtung gekoppelt und zumindest ein erster Lenker der zumindest ersten Führungsvorrichtung als elektrischer Isolator ausgebildet ist.

Dadurch weist die Kontaktierungsvorrichtung selbst einen elektrischen Isolationsabschnitt oder eine Mehrzahl von elektrischen Isolationsabschnitten auf. Elektrische Isolationsfunktionen können mit mechanischen Funktionen der Kontaktierungsvorrichtung verknüpft werden. Separate Isolatoren (z.B. Stützisolatoren auf einem Fahrzeugdach) sind nicht erforderlich.

Dadurch wird eine konstruktive Komplexitätsreduktion, eine Reduktion einer Bauteilanzahl bzw. Bauteilvielfalt sowie eine Verringerung eines Bauraumbedarfs erzielt. Durch den elektrischen Isolationsabschnitt bzw. die elektrischen Isolationsabschnitte werden Bereiche der Kontaktierungsvorrichtung frei von elektrischer Hochspannung gehalten. In diesen Bereichen können beispielsweise Sensoren (z.B. Beschleunigungssensoren, beispielsweise für Überwachungs- und/oder Diagnosefunktionen) angeordnet werden. Beispielsweise kann die erste Federvorrichtung als elektrischer Isolator ausgebildet sein. Dadurch wird z.B. eine Federungsfunktion der Kontaktierungsvorrichtung mit einer elektrischen Isolationsfunktion zusammengeführt, wobei die erste Federvorrichtung den ersten Kontaktkörper mechanisch entkoppelt und ihn zugleich elektrisch von der ersten Lagervorrichtung isoliert.

Ist z.B. die erste Federvorrichtung über das erste Gehäuse mit der ersten Lagervorrichtung verbunden, wobei die erste Federvorrichtung in dem ersten Gehäuse gelagert ist und wobei das erste Gehäuse als elektrischer Isolator ausgebildet ist, so ist dadurch einerseits die erste Federvorrichtung vor Umgebungseinflüssen wie z.B. Feuchtigkeit, Partikel etc. geschützt und trägt andererseits das erste Gehäuse auch zur elektrischen Isolation des ersten Kontaktkörpers bei.

Eine Entlastung der ersten Federvorrichtung sowie eine Abstützung und Führung des ersten Kontaktkörpers relativ zu der ersten Lagervorrichtung wird erreicht, wenn beispielsweise der erste Kontaktkörper über die erste Führungsvorrichtung mit der ersten Lagervorrichtung gekoppelt ist, wobei der erste Lenker der ersten Führungsvorrichtung als elektrischer Isolator ausgebildet ist. Dadurch werden z.B. eine Entlastungsfunktion, eine Stützfunktion und eine Führungsfunktion mit einer elektrischen Isolationsfunktion in der ersten Führungsvorrichtung vereint.

Weitere vorteilhafte Ausgestaltungen der erfindungsgemäßen Kontaktierungsvorrichtung ergeben sich aus den Unteransprüchen.

Hilfreich kann es dabei sein, wenn die zumindest erste Federvorrichtung in einem glasfaserverstärkten Kunststoff ausgebildet ist.

Der glasfaserverstärkte Kunststoff führt einerseits zu einer zuverlässigen elektrischen Isolation und ermöglicht andererseits auch eine Massenreduktion.

Es ist auch möglich, dass die erste Federvorrichtung aus glasfaserverstärktem Kunststoff beispielsweise mit Silikon beschichtet ist.

Eine besonders leichte, kompakte sowie dennoch robuste und verschleißarme Lösung zur Federung und Isolation der ersten Kontaktkörpers erhält man, wenn die zumindest erste Federvorrichtung als Torsionsfeder ausgebildet ist.

Dadurch kann die erste Federvorrichtung neben ihren Funktionen zur mechanischen Entkopplung des ersten Kontaktkörpers und als Isolator auch eine

Drehmomentübertragungsfunktion zwischen dem ersten Kontaktkörper und der ersten Lagervorrichtung erfüllen.

Auf aufwendige Verbindungsvorrichtungen zwischen dem ersten Kontaktkörper und der Lagervorrichtung, z.B. mit Schraubenfedern ummantelte Wellen, d.h. auf eine Trennung einer Federungsfunktion und der Drehmomentübertragungsfunktion, kann verzichtet werden.

Es kann jedoch auch günstig sein, wenn die zumindest erste Federvorrichtung als Gummifederelement ausgebildet ist. Durch diese Maßnahme wird eine konstruktiv besonders einfache federnde Verbindung zwischen dem ersten Kontaktkörper und der ersten Lagervorrichtung erzielt, welche zugleich auch elektrisch isolierend ist.

Das Gummifederelement kann beispielsweise als Silikonelastomer oder als Ethylen-Propylen-Copolymer etc. ausgebildet sein.

In diesem Zusammenhang ist es hilfreich, wenn das erste Gehäuse in einem glasfaserverstärkten Kunststoff ausgebildet ist.

Durch diese Maßnahme wird neben einer effektiven Isolation des ersten Kontaktkörpers auch eine Massenreduktion bewirkt bzw. wird sichergestellt, dass das erste Gehäuse eine möglichst geringe Zusatzmasse verursacht.

Einen Massenvorteil bei zugleich starker Isolationswirkung erhält man, wenn der zumindest erste Lenker in einem glasfaserverstärkten Kunststoff ausgebildet ist.

Vorteile in Bezug auf eine Vereinigung von mechanischen Funktionen und Isolationsfunktionen der erfindungsgemäßen Kontaktierungsvorrichtung können für ein elektrisches Schienenfahrzeug oder für ein elektrisches Nutzfahrzeug auf einer elektrifizierten Straße bzw. Autobahn (z.B. für einen elektrischen Lastkraftwagen oder einen elektrischen Bus) zur Stromabnahme von einem Fahrzeugdach aus genutzt werden, wenn der zumindest erste Kontaktkörper als Schleifleiste einer Wippe für einen Dachstromabnehmer für ein Schienenfahrzeug oder für ein elektrisches Nutzfahrzeug ausgeführt ist.

Ein weiterer Anwendungsbereich im Schienenfahrzeugsektor (beispielsweise für Schienenfahrzeuge, welche über eine seitlich an einem Gleis angeordnete Stromschiene mit Elektrizität versorgt werden, wie z.B. Untergrundbahnen) wird erschlossen, wenn der zumindest erste Kontaktkörper als Schleifschuh für einen Seitenstromabnehmer für ein Schienenfahrzeug ausgeführt ist.

Die genannten Vorteile sind jedoch auch auf ein Ladesystem eines elektrischen Nutzfahrzeugs (beispielsweise eines elektrischen Busses oder eines elektrischen Lastkraftwagens) anwendbar (z.B. zum Laden eines Akkumulators des Nutzfahrzeugs), wenn der zumindest erste Kontaktkörper als Kontaktkopf für einen Ladestromabnehmer für ein elektrisches Nutzfahrzeug ausgeführt ist.

Die Erfindung bezieht sich ferner auch auf einen Stromabnehmer für ein Fahrzeug mit zumindest einer erfindungsgemäßen elektrischen Kontaktierungsvorrichtung.

Darüber hinaus betrifft die Erfindung ein Fahrzeug mit zumindest einem erfindungsgemäßen Stromabnehmer.

Nachfolgend wird die Erfindung anhand von Ausführungsbeispielen näher erläutert.

Es zeigen beispielhaft:
- Fig. 1:: Eine schematische Darstellung einer beispielhaften Ausführungsvariante eines erfindungsgemäßen Stromabnehmers auf einer beispielhaften Ausführungsvariante eines erfindungsgemäßen Fahrzeugs als Seitenriss,
- Fig. 2:: Eine schematische Darstellung einer als Wippe eines Stromabnehmers ausgebildeten beispielhaften ersten Ausführungsvariante einer erfindungsgemäßen elektrischen Kontaktierungsvorrichtung als Aufriss,
- Fig. 3:: Eine schematische, geschnittene Darstellung der beispielhaften ersten Ausführungsvariante einer erfindungsgemäßen elektrischen Kontaktierungsvorrichtung als Seitenriss, und
- Fig. 4:: Eine schematische Darstellung einer beispielhaften zweiten Ausführungsvariante einer erfindungsgemäßen elektrischen Kontaktierungsvorrichtung mit einem als Schleifschuh eines Seitenstromabnehmers ausgebildeten ersten Kontaktkörper als Seitenriss.

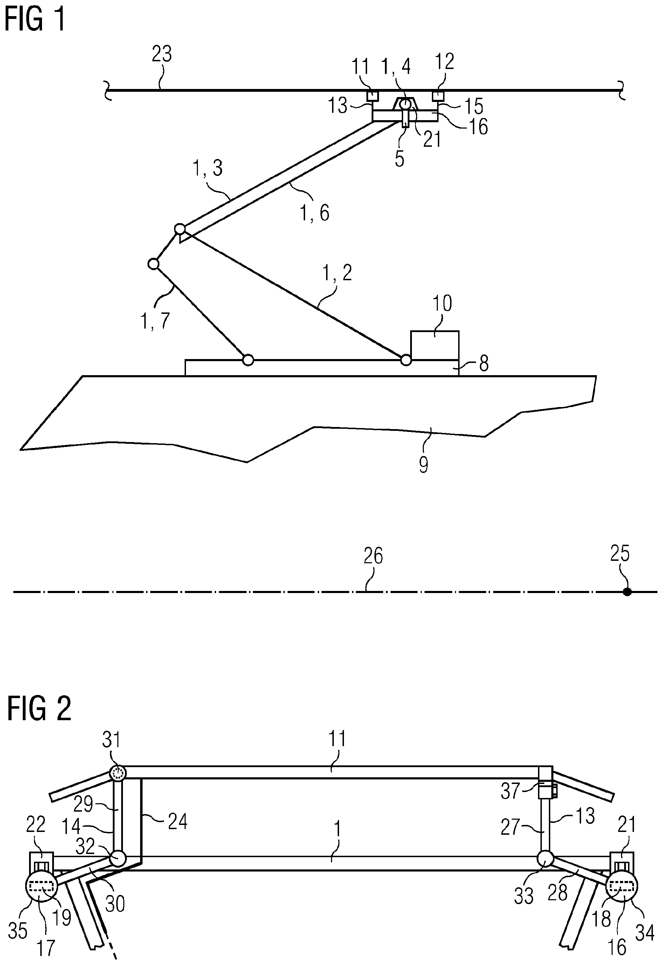

Ein in Fig. 1 dargestellter schematischer Seitenriss zeigt eine beispielhafte Ausführungsvariante eines erfindungsgemäßen Stromabnehmers einer beispielhaften Ausführungsvariante eines erfindungsgemäßen Fahrzeugs mit einem Stromabnehmergestänge 1, welches einen Unterarm 2, einen Oberarm 3, eine Scheitelstange 4 mit einem ersten Auflaufhorn 5 und einem nicht sichtbaren zweiten Auflaufhorn, eine Parallelführungsstange 6 sowie eine Kuppelstange 7 aufweist. Der Unterarm 2 sowie die Kuppelstange 7 sind gelenkig mit einem Grundrahmen 8 verbunden, welcher mit einem Dach 9 des Fahrzeugs verbunden ist. Der Stromabnehmer ist somit als Dachstromabnehmer ausgeführt. Das Fahrzeug ist als Schienenfahrzeug ausgeführt.

Zwischen dem Grundrahmen 8 und dem Unterarm 2 ist ein pneumatischer Hebeantrieb 10 zum Heben und Senken des Stromabnehmers vorgesehen.

Der Oberarm 3 ist gelenkig mit dem Unterarm 2 sowie gelenkig mit der Kuppelstange 7 verbunden, die Parallelführungsstange 6 gelenkig mit dem Unterarm 2.

Auf das Stromabnehmergestänge 1 ist eine beispielhafte Ausführungsvariante einer als Wippe ausgebildeten, erfindungsgemäßen elektrischen Kontaktierungsvorrichtung aufgesetzt, welche als elektrischen ersten Kontaktkörper 11 eine erste Schleifleiste, als elektrischen zweiten Kontaktkörper 12 eine zweite Schleifleiste, eine erste Führungsvorrichtung 13, eine in Fig. 2 sichtbare zweite Führungsvorrichtung 14, eine dritte Führungsvorrichtung 15 sowie eine nicht sichtbare vierte Führungsvorrichtung aufweist.

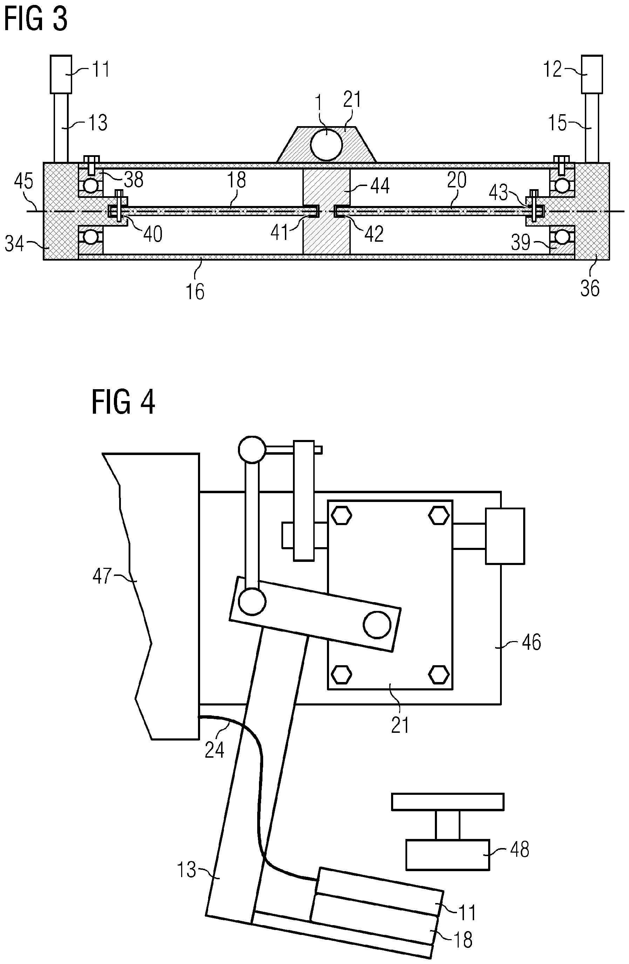

Weiterhin umfasst die Kontaktierungsvorrichtung ein erstes Gehäuse 16 und ein in Fig. 2 sichtbares zweites Gehäuse 17. In Innenräumen des ersten Gehäuses 16 und des zweiten Gehäuses 17 sind eine erste Federvorrichtung 18 und eine zweite Federvorrichtung 19, welche in Fig. 2 gezeigt sind, eine dritte Federvorrichtung 20, welche in Fig. 3 dargestellt ist, sowie eine nicht sichtbare vierte Federvorrichtung gelagert, welche als Torsionsfedern ausgebildet und mit der ersten Führungsvorrichtung 13, der zweiten Führungsvorrichtung 14, der dritten Führungsvorrichtung 15 sowie der vierten Führungsvorrichtung verbunden sind.

Ferner weist die Kontaktierungsvorrichtung eine erste Lagervorrichtung 21 und eine in Fig. 2 sichtbare zweite Lagervorrichtung 22 auf, über welche die Kontaktierungsvorrichtung gelenkig mit der Scheitelstange 4, d.h. mit dem Stromabnehmergestänge 1, verbunden ist.

Der erste Kontaktkörper 11 und der zweite Kontaktkörper 12 sind somit über die erste Führungsvorrichtung 13, die zweite Führungsvorrichtung 14, die dritte Führungsvorrichtung 15, die vierte Führungsvorrichtung, die erste Federvorrichtung 18, die zweite Federvorrichtung 19, die dritte Federvorrichtung 20, die vierte Federvorrichtung, das erste Gehäuse 16 und das zweite Gehäuse 17 mit der ersten Lagervorrichtung 21 und mit der zweiten Lagervorrichtung 22 gekoppelt.

Die erste Lagervorrichtung 21 und die zweite Lagervorrichtung 22 sind wiederum mit dem Stromabnehmergestänge 1 verbunden.

Die Kontaktierungsvorrichtung ist weiterhin gelenkig mit der Parallelführungsstange 6 verbunden und liegt über den ersten Kontaktkörper 11 und den zweiten Kontaktkörper 12, welche aus dem Stand der Technik bekannte, nicht dargestellte Kohleschleifstücke aufweisen, an einem Fahrdraht 23 an, wodurch das Schienenfahrzeug mit Elektrizität versorgt wird. Über eine Fig. 1 nicht sichtbare erste Stromleitung 24, wie sie beispielhaft in Fig. 2 gezeigt ist, ist der erste Kontaktkörper 11 und über eine in Fig. 1 ebenfalls nicht sichtbare zweite Stromleitung ist der zweite Kontaktkörper 12 mit dem Schienenfahrzeug elektrisch verbunden. Die erste Stromleitung 24 und die zweite Stromleitung sind in das Schienenfahrzeug geführt und versorgen Antriebe und weitere Aggregate des Schienenfahrzeugs mit Elektrizität.

Der erste Kontaktkörper 11 und der zweite Kontaktkörper 12 sind von der ersten Lagervorrichtung 21 und der zweiten Lagervorrichtung 22 elektrisch isoliert, wobei die erste Führungsvorrichtung 13, die zweite Führungsvorrichtung 14, die dritte Führungsvorrichtung 15, die vierte Führungsvorrichtung, die erste Federvorrichtung 18, die zweite Federvorrichtung 19, die dritte Federvorrichtung 20, die vierte Federvorrichtung, das erste Gehäuse 16 und das zweite Gehäuse 17 als elektrische Isolatoren ausgebildet sind.

Der erste Kontaktkörper 11 und der zweite Kontaktkörper 12 sind parallel zu einer Fahrzeugquerachse 25, welche in Fig. 1 projizierend erscheint, ausgerichtet. Das erste Gehäuse 16 und das zweite Gehäuse 17 sind parallel zu einer Fahrzeuglängsachse 26 ausgerichtet, d.h. aufgrund der ersten Führungsvorrichtung 13, der zweiten Führungsvorrichtung 14, der dritten Führungsvorrichtung 15 und der vierten Führungsvorrichtung um 90° zu dem ersten Kontaktkörper 11 und dem zweiten Kontaktkörper 12 verdreht.

Erfindungsgemäß ist es jedoch auch denkbar, dass beispielsweise das erste Gehäuse 16 und das zweite Gehäuse 17 parallel zu der Fahrzeugquerachse 25 ausgerichtet sind.

Erfindungsgemäß ist es weiterhin denkbar, dass der Stromabnehmer mit einem elektrischen Nutzfahrzeug (z.B. einem elektrischen Bus oder einem elektrischen Lastkraftwagen) verbunden ist und als Ladestromabnehmer fungiert, wobei der erste Kontaktkörper 11 und der zweite Kontaktkörper 12 als Kontaktleisten eines Kontaktkopfs fungieren und zum Laden von Akkumulatoren des Nutzfahrzeugs mit einer Andockhaube einer stationären Ladestation in mechanischen und elektrischen Kontakt gebracht werden können.

Ferner ist es vorstellbar, dass der Stromabnehmer auf einem elektrischen Nutzfahrzeug (z.B. auf einem elektrischen Lastkraftwagen oder einem elektrischen Bus), welches eine elektrifizierte Straße bzw. Autobahn befährt, eingesetzt ist.

In Fig. 2 ist eine beispielhafte erste Ausführungsvariante einer erfindungsgemäßen elektrischen Kontaktierungsvorrichtung als schematischer Aufriss offenbart.

Die als Wippe ausgebildete Kontaktierungsvorrichtung ist mit einem Stromabnehmer eines Fahrzeugs verbunden und umfasst einen ersten Kontaktkörper 11 sowie einen in Fig. 1 und Fig. 3 gezeigten zweiten Kontaktkörper 12, die als Schleifleisten ausgeführt sind.

Weiterhin weist die Kontaktierungsvorrichtung eine erste Führungsvorrichtung 13, eine zweite Führungsvorrichtung 14, eine ein Fig. 3 gezeigte dritte Führungsvorrichtung 15 sowie eine nicht sichtbare vierte Führungsvorrichtung auf.

Darüber hinaus umfasst die Kontaktierungsvorrichtung eine erste Lagervorrichtung 21 und eine zweite Lagervorrichtung 22, welche über ein erstes Gehäuse 16 und ein zweites Gehäuse 17 mit der ersten Führungsvorrichtung 13, der zweiten Führungsvorrichtung 14, der dritten Führungsvorrichtung 15 sowie der vierten Führungsvorrichtung verbunden sind. Über die erste Lagervorrichtung 21 und die zweite Lagervorrichtung 22 ist die Kontaktierungsvorrichtung gelenkig mit einem Stromabnehmergestänge 1 verbunden.

Die erste Führungsvorrichtung 13 weist einen ersten Lenker 27 und einen zweiten Lenker 28 auf, die zweite Führungsvorrichtung 14 einen dritten Lenker 29 und einen vierten Lenker 30. Der erste Lenker 27, der zweite Lenker 28, der dritte Lenker 29 und der vierte Lenker 30 sind in einem glasfaserverstärkten Kunststoff ausgebildet.

Die Kontaktierungsvorrichtung weist weiterhin eine erste Aufnahmevorrichtung 34 und eine zweite Aufnahmevorrichtung 35 auf.

Der dritte Lenker 29 ist über ein elastisches erstes Drehgelenk 31 mit dem ersten Kontaktkörper 11 verbunden, der vierte Lenker 30 über ein zweites Drehgelenk 32 mit dem dritten Lenker 29. Der vierte Lenker 30 ist mittels Verschraubung weiterhin fest mit der zweiten Aufnahmevorrichtung 35 verbunden, diese wiederum drehbar mit dem zweiten Gehäuse 17.

Der erste Lenker 27 ist mittels eines elastischen Verbindungselements 37 mit dem ersten Kontaktkörper 11 verbunden, der zweite Lenker 28 über ein drittes Drehgelenk 33 mit dem ersten Lenker 27. Der zweite Lenker 28 ist weiterhin fest mit der ersten Aufnahmevorrichtung 34 verbunden, diese wiederum drehbar mit dem ersten Gehäuse 16.

Der zweite Kontaktkörper 12 ist über die dritte Führungsvorrichtung 15 und über eine in Fig. 3 gezeigte dritte Aufnahmevorrichtung 36 mit dem ersten Gehäuse 16 sowie über die vierte Führungsvorrichtung und eine nicht sichtbare vierte Aufnahmevorrichtung mit dem zweiten Gehäuse 17 verbunden.

Der zweite Kontaktkörper 12, die dritte Führungsvorrichtung 15, die vierte Führungsvorrichtung, die dritte Aufnahmevorrichtung 36 und die vierte Aufnahmevorrichtung sind in ihrer Anordnung zueinander sowie werkstofftechnisch und konstruktiv vergleichbar mit dem ersten Kontaktkörper 11, der ersten Führungsvorrichtung 13, der zweiten Führungsvorrichtung 14, der ersten Aufnahmevorrichtung 34 und der zweiten Aufnahmevorrichtung 35 ausgeführt.

In einem ersten Innenraum des ersten Gehäuses 16 ist eine erste Federvorrichtung 18 vorgesehen und mittels Verschraubung fest mit der ersten Aufnahmevorrichtung 34 verbunden.

In einem zweiten Innenraum des zweiten Gehäuses 17 ist eine zweite Federvorrichtung 19 vorgesehen und mittels Verschraubung fest mit der zweiten Aufnahmevorrichtung 35 verbunden.

Eine weiterhin in dem ersten Innenraum des ersten Gehäuses 16 angeordnete, in Fig. 3 gezeigte dritte Federvorrichtung 20 ist mit der dritten Aufnahmevorrichtung 36 verschraubt.

Eine weiterhin in dem zweiten Innenraum des zweiten Gehäuses 17 angeordnete, nicht sichtbare vierte Federvorrichtung ist mit der vierten Aufnahmevorrichtung verschraubt.

Die erste Federvorrichtung 18, die zweite Federvorrichtung 19, die dritte Federvorrichtung 20 und die vierte Federvorrichtung sind als Torsionsfedern ausgebildet und weisen rechteckige Querschnitte auf.

Die erste Federvorrichtung 18 und die dritte Federvorrichtung 20 sind weiterhin drehfest über verschiebliche Lagerungen mit dem ersten Gehäuse 16 verbunden, die zweite Federvorrichtung 19 und die vierte Federvorrichtung drehfest über verschiebliche Lagerungen mit dem zweiten Gehäuse 17. Dies ist anhand der ersten Federvorrichtung 18 und der dritten Federvorrichtung 20 beispielhaft im Zusammenhang mit Fig. 3 beschrieben.

Der erste Kontaktkörper 11 und der zweite Kontaktkörper 12 sind von der ersten Lagervorrichtung 21 und der zweiten Lagervorrichtung 22 elektrisch isoliert, wobei die erste Führungsvorrichtung 13, die zweite Führungsvorrichtung 14, die dritte Führungsvorrichtung 15, die vierte Führungsvorrichtung, die erste Federvorrichtung 18, die zweite Federvorrichtung 19, die dritte Federvorrichtung 20, die vierte Federvorrichtung, die erste Aufnahmevorrichtung 34, die zweite Aufnahmevorrichtung 35, die dritte Aufnahmevorrichtung 36, die vierte Aufnahmevorrichtung, das erste Gehäuse 16 und das zweite Gehäuse 17 als elektrische Isolatoren ausgebildet sind.

Über eine erste Stromleitung 24 ist der erste Kontaktkörper 11 mit dem Fahrzeug elektrisch verbunden, über eine in Fig. 2 nicht sichtbare zweite Stromleitung der zweite Kontaktkörper 12. Die erste Stromleitung 24 und die zweite Stromleitung sind in das Fahrzeug geführt und versorgen Antriebe und weitere Aggregate des Fahrzeugs mit Elektrizität.

Die erste Stromleitung 24 und die zweite Stromleitung passen sich an Auslenkungen des Stromabnehmers flexibel an.

In Fig. 3 ist jene beispielhafte erste Ausführungsvariante einer erfindungsgemäßen elektrischen Kontaktierungsvorrichtung eines Stromabnehmers eines Fahrzeugs schematisch dargestellt, die auch in Fig. 1 und Fig. 2 gezeigt ist. Es werden daher in Fig. 3 teilweise gleiche Bezugszeichen wie in Fig. 1 und Fig. 2 verwendet.

Im Unterschied zu Fig. 2, die einen Aufriss der Kontaktierungsvorrichtung zeigt, ist in Fig. 3 ein geschnittener Seitenriss der Kontaktierungsvorrichtung dargestellt, welcher eine in Bezug auf den Aufriss um 90° verdrehte Ansicht der Kontaktierungsvorrichtung offenbart.

Die Kontaktierungsvorrichtung umfasst einen ersten Kontaktkörper 11, einen zweiten Kontaktkörper 12, eine erste Führungsvorrichtung 13, eine in Fig. 2 gezeigte zweite Führungsvorrichtung 14, eine dritte Führungsvorrichtung 15, eine nicht sichtbare vierte Führungsvorrichtung, ein erstes Gehäuse 16 sowie ein in Fig. 2 dargestelltes zweites Gehäuse 17, welche mit einer ersten Aufnahmevorrichtung 34, einer in Fig. 2 gezeigten zweiten Aufnahmevorrichtung 35, einer dritten Aufnahmevorrichtung 36 und einer nicht sichtbaren vierten Aufnahmevorrichtung verbunden sind.

Mit der ersten Aufnahmevorrichtung 34 ist eine erste Federvorrichtung 18, mit der zweiten Aufnahmevorrichtung 35 eine in Fig. 2 dargestellte zweite Federvorrichtung 19, mit der dritten Aufnahmevorrichtung 36 eine dritte Federvorrichtung 20 sowie mit der vierten Aufnahmevorrichtung eine nicht sichtbare vierte Federvorrichtung verbunden.

Die Kontaktierungsvorrichtung weist ferner eine mit dem ersten Gehäuse 16 fest verbundene erste Lagervorrichtung 21 und eine mit dem zweiten Gehäuse 17 fest verbundene, in Fig. 2 gezeigte zweite Lagervorrichtung 22 auf, über welche die Kontaktierungsvorrichtung gelenkig mit einem Stromabnehmergestänge 1 verbunden ist.

Der erste Kontaktkörper 11 ist über die erste Führungsvorrichtung 13 mit der ersten Aufnahmevorrichtung 34 verbunden, wobei die erste Führungsvorrichtung 13 und die erste Aufnahmevorrichtung 34 miteinander verschraubt sind. Die erste Aufnahmevorrichtung 34 ist über ein erstes Wälzlager 38 drehbar mit dem hohlzylindrischen ersten Gehäuse 16 verbunden. Das erste Wälzlager 38 ist mit dem ersten Gehäuse 16 verschraubt.

Die erste Aufnahmevorrichtung 34 weist stirnseitig eine erste Nut 40 auf, in welche ein erstes Ende der ersten Federvorrichtung 18 eingespannt und verschraubt ist.

Die erste Federvorrichtung 18 ist als Torsionsfeder ausgebildet, weist einen rechteckigen Querschnitt auf und ist über ihr zweites Ende drehfest und verschieblich in einer zweiten Nut 41 eines zylindrischen, in dem ersten Gehäuse 16 unbeweglich gelagerten Spannstücks 44 gelagert. Die zweite Nut 41 ist an einer ersten Stirnseite des Spannstücks 44 ausgefräst.

An einer zweiten Stirnseite des Spannstücks 44 ist eine dritte Nut 42 vorgesehen, über welche die dritte Federvorrichtung 20 drehfest und verschieblich mit dem ersten Gehäuse 16 verbunden ist. Die dritte Federvorrichtung 20 ist weiterhin mit einer dritten Aufnahmevorrichtung 36 mittels Einspannung in eine vierte Nut 43, welche stirnseitig in der dritten Aufnahmevorrichtung 36 vorgesehen ist, und Verschraubung verbunden. Die dritte Federvorrichtung 20 ist als Torsionsfeder ausgebildet und im Hinblick auf Werkstoff, Geometrie, Verbindungstechnik und Ausrichtung gleich wie die erste Federvorrichtung 18 ausgeführt.

Die erste Federvorrichtung 18 und die dritte Federvorrichtung 20 weisen ein und dieselbe Längsachse 45 auf.

Die erste Federvorrichtung 18, die dritte Federvorrichtung 20 und das Spannstück 44 sind in einem ersten Innenraum des ersten Gehäuses 16 angeordnet.

Eine Gehäuselängsachse des ersten Gehäuses 16 und die Längsachse 45 der ersten Federvorrichtung 18 und der dritten Federvorrichtung 20 verlaufen ineinander.

Die dritte Aufnahmevorrichtung 36 ist über ein zweites Wälzlager 39, welches wie das erste Wälzlager 38 mit dem ersten Gehäuse 16 verschraubt ist, drehbar mit dem ersten Gehäuse 16 verbunden.

Mit der dritten Aufnahmevorrichtung 36 ist die dritte Führungsvorrichtung 15 verschraubt.

Die dritte Führungsvorrichtung 15 ist wiederum mit dem zweiten Kontaktkörper 12 verbunden.

Die zweite Lagervorrichtung 22 ist konstruktiv und bezüglich ihrer Verbindung mit dem Stromabnehmergestänge 1 gleich wie die erste Lagervorrichtung 21 ausgebildet.

Das zweite Gehäuse 17 und dessen Gehäuseinhalt mit der zweiten Federvorrichtung 19 und der vierten Federvorrichtung sind konstruktiv und funktional gleich wie das erste Gehäuse 16 und dessen Gehäuseinhalt ausgeführt.

Das zweite Gehäuse 17 ist parallel zu dem ersten Gehäuse 16 angeordnet und ausgerichtet.

Der erste Kontaktkörper 11 und der zweite Kontaktkörper 12 sind von der ersten Lagervorrichtung 21 und der zweiten Lagervorrichtung 22 elektrisch isoliert, wobei die erste Führungsvorrichtung 13, die zweite Führungsvorrichtung 14, die dritte Führungsvorrichtung 15, die vierte Führungsvorrichtung, die erste Federvorrichtung 18, die zweite Federvorrichtung 19, die dritte Federvorrichtung 20, die vierte Federvorrichtung, die erste Aufnahmevorrichtung 34, die zweite Aufnahmevorrichtung 35, die dritte Aufnahmevorrichtung 36, die vierte Aufnahmevorrichtung, das erste Gehäuse 16 und das zweite Gehäuse 17 in einem glasfaserverstärkten Kunststoff und somit als elektrische Isolatoren ausgebildet sind. Der eingesetzte glasfaserverstärkte Kunststoff weist einen spezifischen

Widerstand von mehr als 10¹⁰ Ω·cm und eine Durchschlagsfestigkeit von mehr als 20 kV/mm auf. Die erste Lagervorrichtung 21 und die zweite Lagervorrichtung 22 weisen Erdpotential auf.

Erfindungsgemäß ist es auch denkbar, beispielsweise die erste Führungsvorrichtung 13, die zweite Führungsvorrichtung 14, die dritte Führungsvorrichtung 15, die vierte Führungsvorrichtung, die erste Federvorrichtung 18, die zweite Federvorrichtung 19, die dritte Federvorrichtung 20, die vierte Federvorrichtung, die erste Aufnahmevorrichtung 34, die zweite Aufnahmevorrichtung 35, die dritte Aufnahmevorrichtung 36 und die vierte Aufnahmevorrichtung in einem metallischen Werkstoff auszuführen, wenn eine Isolationswirkung der ersten Federvorrichtung 18, der zweiten Federvorrichtung 19, der dritten Federvorrichtung 20, der vierten Federvorrichtung, des ersten Gehäuses 16 und des zweiten Gehäuses 17 ausreichend sind.

Über eine in Fig. 2 sichtbare erste Stromleitung 24 ist der erste Kontaktkörper 11 mit dem Fahrzeug elektrisch verbunden, über eine nicht sichtbare zweite Stromleitung der zweite Kontaktkörper 12. Die erste Stromleitung 24 und die zweite Stromleitung sind in das Fahrzeug geführt und versorgen Antriebe und weitere Aggregate des Fahrzeugs mit Elektrizität.

In Fig. 4 ist eine schematische Darstellung einer beispielhaften zweiten Ausführungsvariante einer erfindungsgemäßen elektrischen Kontaktierungsvorrichtung mit einem als Schleifschuh eines Seitenstromabnehmers eines Schienenfahrzeugs ausgebildeten elektrischen ersten Kontaktkörper 11 als Seitenriss offenbart.

Der erste Kontaktkörper 11 ist über eine erste Federvorrichtung 18 und eine erste Führungsvorrichtung 13 mit einer ersten Lagervorrichtung 21 gekoppelt. Die erste Lagervorrichtung 21 ist mit einem Stromabnehmerhalter 46 verbunden, welcher wiederum seitlich mit einem Fahrwerksrahmen 47 des Schienenfahrzeugs gekoppelt ist.

Durch Auslenkung der ersten Führungsvorrichtung 13 kann der erste Kontaktkörper 11 an eine Stromschiene 48 anlegen, wodurch das Schienenfahrzeug mit Elektrizität versorgt wird. Die erste Federvorrichtung 18 ist als Gummifederelement ausgebildet und fungiert als elektrischer Isolator. Das Gummifederelement ist als Ethylen-Propylen-Copolymer ausgebildet.

Der erste Kontaktkörper 11 und die erste Lagervorrichtung 21 sind somit voneinander elektrisch isoliert. Die erste Lagervorrichtung 21 weist Erdpotential auf.

Der erste Kontaktkörper 11 ist über eine erste Stromleitung 24, welche sich an Auslenkungen des ersten Kontaktkörpers 11 flexibel anpasst, mit dem Fahrwerksrahmen 47 elektrisch verbunden.

### Liste der Bezeichnungen

- 1: Stromabnehmergestänge
- 2: Unterarm
- 3: Oberarm
- 4: Scheitelstange
- 5: Erstes Auflaufhorn
- 6: Parallelführungsstange
- 7: Kuppelstange
- 8: Grundrahmen
- 9: Dach
- 10: Hebeantrieb
- 11: Erster Kontaktkörper
- 12: Zweiter Kontaktkörper
- 13: Erste Führungsvorrichtung
- 14: Zweite Führungsvorrichtung
- 15: Dritte Führungsvorrichtung
- 16: Erstes Gehäuse
- 17: Zweites Gehäuse
- 18: Erste Federvorrichtung
- 19: Zweite Federvorrichtung
- 20: Dritte Federvorrichtung
- 21: Erste Lagervorrichtung
- 22: Zweite Lagervorrichtung
- 23: Fahrdraht
- 24: Erste Stromleitung
- 25: Fahrzeugquerachse
- 26: Fahrzeuglängsachse
- 27: Erster Lenker
- 28: Zweiter Lenker
- 29: Dritter Lenker
- 30: Vierter Lenker
- 31: Erstes Drehgelenk
- 32: Zweites Drehgelenk
- 33: Drittes Drehgelenk
- 34: Erste Aufnahmevorrichtung
- 35: Zweite Aufnahmevorrichtung
- 36: Dritte Aufnahmevorrichtung
- 37: Verbindungselement
- 38: Erstes Wälzlager
- 39: Zweites Wälzlager
- 40: Erste Nut
- 41: Zweite Nut
- 42: Dritte Nut
- 43: Vierte Nut
- 44: Spannstück
- 45: Längsachse
- 46: Stromabnehmerhalter
- 47: Fahrwerksrahmen
- 48: Stromschiene

## Patentansprüche

1. Elektrische Kontaktierungsvorrichtung für einen Stromabnehmer eines Fahrzeugs, mit zumindest einem elektrischen ersten Kontaktkörper (11), welcher über zumindest eine erste Federvorrichtung (18) mit zumindest einer ersten Lagervorrichtung (21) gekoppelt ist, wobei die zumindest erste Lagervorrichtung (21) mit einem Stromabnehmergestänge (1) oder einem Stromabnehmerhalter (46) verbindbar ist, wobei der zumindest erste Kontaktkörper (11) mit einem Fahrzeug elektrisch verbindbar ist, **dadurch gekennzeichnet, dass** der zumindest erste Kontaktkörper (11) und die zumindest erste Lagervorrichtung (21) voneinander elektrisch isoliert sind, wobei die zumindest erste Federvorrichtung (18) als elektrischer Isolator ausgebildet ist, oder/und wobei die zumindest erste Federvorrichtung (18) über ein erstes Gehäuse (16) mit der zumindest ersten Lagervorrichtung (21) verbunden, die zumindest erste Federvorrichtung (18) in dem ersten Gehäuse (16) gelagert und das erste Gehäuse (16) als elektrischer Isolator ausgebildet ist, oder/und wobei der zumindest erste Kontaktkörper (11) über zumindest eine erste Führungsvorrichtung (13) mit der zumindest ersten Lagervorrichtung (21) gekoppelt und zumindest ein erster Lenker (27) der zumindest ersten Führungsvorrichtung (13) als elektrischer Isolator ausgebildet ist.

2. Elektrische Kontaktierungsvorrichtung nach Anspruch 1, **dadurch gekennzeichnet, dass** die zumindest erste Federvorrichtung (18) in einem glasfaserverstärkten Kunststoff ausgebildet ist.

3. Elektrische Kontaktierungsvorrichtung nach Anspruch 2, **dadurch gekennzeichnet, dass** die zumindest erste Federvorrichtung (18) als Torsionsfeder ausgebildet ist.

4. Elektrische Kontaktierungsvorrichtung nach Anspruch 1, **dadurch gekennzeichnet, dass** die zumindest erste Federvorrichtung (18) als Gummifederelement ausgebildet ist.

5. Elektrische Kontaktierungsvorrichtung nach einem der Ansprüche 1 bis 4, **dadurch gekennzeichnet, dass** das erste Gehäuse (16) in einem glasfaserverstärkten Kunststoff ausgebildet ist.

6. Elektrische Kontaktierungsvorrichtung nach einem der Ansprüche 1 bis 5, **dadurch gekennzeichnet, dass** der zumindest erste Lenker (27) in einem glasfaserverstärkten Kunststoff ausgebildet ist.

7. Elektrische Kontaktierungsvorrichtung nach einem der Ansprüche 1 bis 6, **dadurch gekennzeichnet, dass** der zumindest erste Kontaktkörper (11) als Schleifleiste einer Wippe für einen Dachstromabnehmer für ein Schienenfahrzeug oder für ein elektrisches Nutzfahrzeug ausgeführt ist.

8. Elektrische Kontaktierungsvorrichtung nach einem der Ansprüche 1 bis 6, **dadurch gekennzeichnet, dass** der zumindest erste Kontaktkörper (11) als Schleifschuh für einen Seitenstromabnehmer für ein Schienenfahrzeug ausgeführt ist.

9. Elektrische Kontaktierungsvorrichtung nach einem der Ansprüche 1 bis 6, **dadurch gekennzeichnet, dass** der zumindest erste Kontaktkörper (11) als Kontaktkopf für einen Ladestromabnehmer für ein elektrisches Nutzfahrzeug ausgeführt ist.

10. Stromabnehmer für ein Fahrzeug mit zumindest einer elektrischen Kontaktierungsvorrichtung nach einem der Ansprüche 1 bis 9.

11. Fahrzeug mit zumindest einem Stromabnehmer nach Anspruch 10.
